# EUROPÄISCHE PATENTSCHRIFT

(11) **EP 2 676 875 B1**
(45) Veröffentlichungstag und Bekanntmachung des Hinweises auf die Patenterteilung: **06.06.2018**
(21) Anmeldenummer: 13165813.0
(22) Anmeldetag: 29.04.2013
(51) Int. Cl.: B63G 8/00, H04W 52/02

(54) **Unterseeboot**
Submarine
Submersible

(30) Priorität: 21.06.2012 DE 102012210526
(43) Veröffentlichungstag der Anmeldung: 25.12.2013
(73) Patentinhaber: ThyssenKrupp Marine Systems GmbH, 24143 Kiel (DE)
(72) Erfinder: Matthiesen, Hans Peter, 24107 Kiel (DE); Heinz, Stefan, 24116 Kiel (DE)
(74) Vertreter: thyssenkrupp Intellectual Property GmbH

(56) Entgegenhaltungen:
- US-A- 5 560 021
- US-A1- 2006 100 002
- US-B1- 6 356 538

## Beschreibung

Die Erfindung betrifft ein Unterseeboot.

Bei konventionellen Unterseebooten, d. h. nicht nuklear angetriebenen Unterseebooten, wird die Unterwasserausdauer des Unterseeboots durch die hierfür zur Verfügung stehende elektrische Energie begrenzt. Diese elektrische Energie wird üblicherweise in Batterien gespeichert, die auch alle weiteren elektrischen Verbraucher in dem Unterseeboot mit elektrischer Energie versorgen. Es hat sich gezeigt, dass bei langsamer Tauchfahrt konventioneller Unterseeboote (z. B. bei Schleichfahrt dieser Unterseeboote) der elektrische Leistungsbedarf der weiteren elektrischen Verbraucher mindestens die Hälfte des gesamten elektrischen Leistungsbedarfs des Unterseeboots ausmacht, so dass diese elektrischen Verbraucher die mögliche Unterwasserausdauer des Unterseeboots in erheblichem Maße verringern.

Aus der US 2006/0100002 A1 ist ein drahtloses Kommunikationssystem mit batteriebetriebenen Netzwerkknoten zum Einsatz in einem Unterseeboot bekannt. Die batteriebetriebenen Netzwerkknoten weisen einen Transceiver auf, der von der Steuerung (Prozessor) des jeweiligen Netzwerkknotens ein- bzw. ausgeschaltet werden kann, um Energie zu sparen. Das Ein- bzw. Ausschalten des Transceivers erfolgt ereignisgesteuert von Betriebszuständen, die von Sensoren ermittelt werden, z. B. das Einschalten einer Heizung abhängig von einer veränderten Umgebungstemperatur. Die batteriebetriebenen Netzwerkknoten kommunizieren nur innerhalb des Unterseeboots. Zusätzlich wird ein Netzwerkkoordinator (Server) gezeigt, der auch eine drahtgebundene Kommunikation nach außen steuert, welche jedoch nicht in das Energiemanagement des Systems eingebunden ist und nicht selbsttätig ein- bzw. ausgeschaltet wird. Das System sieht ein Energiemanagement drahtloser Netzwerkkomponenten innerhalb eines Unterseeboots vor, ist jedoch nicht zum Energiemanagement von Funkanlagen zur Kommunikation von/nach außerhalb des Unterseeboots geeignet bei dem Betriebszustände eines Unterseeboots berücksichtigt werden.

Vor diesem Hintergrund liegt der Erfindung die Aufgabe zugrunde, ein Unterseeboot zu schaffen, welches im Hinblick auf die elektrische Leistungsaufnahme gegenüber bislang bekannten und vergleichbaren Unterseebooten verbessert ist.

Gelöst wird diese Aufgabe durch ein Unterseeboot mit den in Anspruch 1 angegebenen Merkmalen. Vorteilhafte Weiterbildungen dieses Unterseeboots sind den Unteransprüchen, der nachfolgenden Beschreibung sowie der Zeichnung zu entnehmen. Hierbei können gemäß der Erfindung die in den Unteransprüchen angegebenen Merkmale für sich, aber auch in geeigneter Kombination die erfindungsgemäße Lösung gemäß Anspruch 1 weiter ausgestalten.

Das erfindungsgemäße Unterseeboot weist in üblicher Weise eine Kommunikationsanlage auf. Diese Kommunikationsanlage enthält vorzugsweise alle Einrichtungen des Unterseeboots, mit denen informationstragende Signale von dem Unterseeboot nach außerhalb des Unterseeboots übertragen werden können und von außerhalb des Unterseeboots empfangen werden können.

Die Grundidee der Erfindung besteht darin, das erfindungsgemäße Unterseeboot mit einer Steuerung zum Energiemanagement der Kommunikationsanlage auszustatten, die in Abhängigkeit vorbestimmter Zustände eine oder mehrere elektrische Komponenten der Kommunikationsanlage selbsttätig ein- oder ausschaltet. Ziel dieser Ausgestaltung ist es, sicherzustellen, dass nur diejenigen Komponenten der Kommunikationsanlage betriebsbereit gehalten werden, die gerade verwendet werden oder in Betrieb sein müssen und alle übrigen Komponenten der Kommunikationsanlage von der Steuerung selbstständig ausschalten zu lassen. Hierzu werden zunächst beispielsweise den Betrieb des Unterseeboots betreffende Zustandsgrößen in der Steuerung ausgewertet, woraufhin dann in der Steuerung die Entscheidung getroffen wird, ob eine Komponente ein- oder ausgeschaltet zu sein hat und von der Steuerung entsprechend geschaltet wird. Durch diese Maßnahme wird die elektrische Leistungsaufnahme der Kommunikationsanlage in erheblichem Maße reduziert.

Bevorzugt weist die Kommunikationsanlage des erfindungsgemäßen Unterseeboots mehrere zum Betrieb in unterschiedlichen Frequenzbereichen ausgebildete Sende- und/oder Empfangseinrichtungen auf, die jeweils von der Steuerung selbsttätig ein- und ausschaltbar sind. Hierbei sind zweckmäßigerweise nicht nur die direkt zum Senden und Empfangen von Nachrichtensignalen erforderlichen Komponenten der Sende- und/oder Empfangseinrichtungen sondern auch deren Peripheriegeräte wie z. B. Computer mittels der Steuerung ein- und ausschaltbar. Bei den Sende- und/oder Empfangseinrichtungen kann es sich z. B. um Einrichtungen handeln, die in verschiedenen Frequenzbereichen, beispielsweise im VLF- Bereich, VLF-Bereich bei Einsatz einer Schleppantenne, HF-Bereich, UHF-Bereich oder satellitengestützt im UHF-Bereich senden und/oder empfangen.

Vorteilhaft können die einzelnen Sende- und/oder Empfangseinrichtungen der Kommunikationsanlage aufgrund der Position der Antenne der jeweiligen Sende- und/oder Empfangseinrichtung von der Steuerung ein- und ausgeschaltet werden. Grundlage dieser Maßnahme ist die Tatsache, dass eine Sende- oder Empfangseinrichtung eines Unterseeboots nur betrieben werden kann, wenn sich die Antenne dieser Einrichtung in einer Position befindet, in der von ihr Signale empfangen und/oder ausgestrahlt werden können und die Sende- oder Empfangseinrichtung daher anderenfalls ausgeschaltet werden kann. So ist es z. B. bei in dem Turm des Unterseeboots angeordneten Antennen bei Fahrt des Unterseeboots in Sehrohrtiefe erforderlich, dass diese Antennen so weit aus dem Turm ausgefahren sind, dass sich der Fußpunkt dieser Antennen oberhalb der Wasserlinie befindet. Eine Schleppantenne kann nur dann Signale empfangen und/oder ausstrahlen, wenn sie hinter dem Unterseeboot hergeschleppt wird. Zweckmäßigerweise ist die Steuerung zum Energiemanagement der Kommunikationsanlage zur Erfassung der Antennenposition der einzelnen Sende- und Empfangseinrichtungen ausgebildet. Beispielsweise können in dem Turm des Unterseeboots und/oder an einer Einrichtung zum Ausbringen und Einholen einer Schleppantenne mit der Steuerung signalverbundene Sensoren angeordnet sein, die der Steuerung melden, wenn sich eine Antenne in ihrer Betriebsposition befindet oder nicht und vorzugsweise auch melden, wenn eine Antenne gerade in ihre Betriebsposition verbracht wird, so dass in diesem Fall eine zu dieser Antenne gehörende Sende- und/oder Empfangseinrichtung bereits während des Ausfahrens der Antenne eingeschaltet wird, was insofern vorteilhaft ist, als diese Einrichtungen eine gewisse Zeit benötigen, bis sie betriebsbereit sind, aber dann, wenn die Antenne auch ihre Betriebsbereitschaft erreicht hat, ebenfalls betriebsbereit sind.

Bei Antennen, die an in dem Turm des Unterseeboots befindlichen Ausfahrmasten angeordnet sind, ist weiter vorteilhaft vorgesehen, dass die einzelnen Sende- und/oder Empfangseinrichtungen der Kommunikationsanlage aufgrund des Betriebszustands der Ausfahrmasten von der Steuerung ein- und ausgeschaltet werden. Hierbei ist unter dem Betriebszustand deren Position in dem Turm zu verstehen. So werden Sende- und/oder Empfangseinrichtungen, deren Antenne auf einem Ausfahrmast angeordnet ist, der sich in dem Turm in einer eingefahrenen Position befindet, von der Steuerung ausgeschaltet und solche Sende- und/oder Empfangseinrichtungen, deren Antenne auf einem Ausfahrmast angeordnet ist, der sich in dem Turm in einer ausgefahrenen Position befindet oder deren Ausfahrmast in dem Turm gerade in diese Position ausgefahren wird, eingeschaltet.

Besonders vorteilhaft können die einzelnen Sende- und/oder Empfangseinrichtungen der Kommunikationsanlage aufgrund der Tauchtiefe des Unterseeboots von der Steuerung ein- und ausgeschaltet werden. So können Sende- und/oder Empfangseinrichtungen, die eine aus dem Turm des Unterseeboots ausfahrbare Antenne aufweisen, dann, wenn sich das Unterseeboot in einer Tauchtiefe befindet, die derart ist, dass die Antennen nicht in eine Sende- bzw. Empfangsposition oberhalb der Wasserlinie gebracht werden können, selbsttätig von der Steuerung ausgeschaltet werden, da in diesem Fall ein Einsatz dieser Sende- und/oder Empfangseinrichtungen per se nicht möglich ist. Gemäß einer weiteren vorteilhaften Ausgestaltung des erfindungsgemäßen Unterseeboots weist dessen Kommunikationsanlage mindestens eine Stillstandheizung auf, die von der Steuerung selbsttätig ein- und ausschaltbar ist. Die Verwendung von Stillstandheizungen ist in Unterseebooten üblich und dient dazu, in elektrisch betriebenen Geräten und Vorrichtungen die Bildung von Kondenswasser zu verhindern. Insofern ist in einem Unterseeboot in der Regel jedem elektrisch betriebenen Gerät und jeder solchen Vorrichtung eine Stillstandheizung zugeordnet, die bislang immer dann eingeschaltet gehalten wird, wenn das betreffende Gerät bzw. die betreffende Vorrichtung ausgeschaltet ist. In der Kommunikationsanlage sind die Stillstandheizungen üblicherweise in den Schaltschränken und Konsolen angeordnet, in denen sich auch die Sende- und/oder Empfangseinrichtungen befinden.

Der Erfindung liegt die weitere Erkenntnis zugrunde, dass es zumeist gar nicht erforderlich ist, die Stillstandheizungen einzuschalten, da beim Fahrbetrieb des Unterseeboots in diesem gar nicht die atmosphärischen Bedingungen auftreten, die zu einer Kondenswasserbildung führen, da zum Beispiel bei Tauchfahrt des Unterseeboots immer dessen Klimaanlage in Betrieb ist. Mit Hilfe der Steuerung zum Energiemanagement der Kommunikationsanlage wird vorteilhaft selbstständig geprüft, ob im Bereich der einzelnen Sende- und Empfangseinrichtungen überhaupt solche atmosphärischen Bedingungen herrschen, die die Bildung von Kondenswasser ermöglich, woraufhin die Steuerung nur dann, wenn dies der Fall ist, die Stillstandheizungen der Kommunikationsanlage einschalten, sie aber ansonsten ausgeschaltet bleiben oder selbsttätig von der Steuerung ausgeschaltet werden.

Zur Prüfung, ob es in den einzelnen Sende- und/oder Empfangseinrichtungen der Kommunikationsanlage zur Bildung von Kondenswasser kommen kann, werden von der Steuerung zum Energiemanagement der Kommunikationsanlage vorteilhaft die Temperatur der die Kommunikationsanlage umgebenden Atmosphäre und die Feuchtigkeit der die Kommunikationsanlage umgebenden Atmosphäre einzeln oder gemeinsam herangezogen und die Stillstandheizungen in Abhängigkeit von der Temperatur, der Feuchtigkeit und der Tauchtiefe ein- oder ausgeschaltet.

Zur Ermittlung der Temperatur- und Feuchtigkeitswerte in der Umgebung der einzelnen Sende- und/oder Empfangseinrichtungen sind vorzugsweise in deren unmittelbarer Nähe Mittel zur Erfassung der Temperatur und Mittel zur Erfassung der Luftfeuchtigkeit angeordnet, die mit der Steuerung signalverbunden sind. Hierbei können alle geeigneten Temperatur- und Feuchtigkeitssensoren zum Einsatz kommen.

Nachfolgend ist die Erfindung anhand eines in der Zeichnung dargestellten Ausführungsbeispiels näher erläutert. In der Zeichnung zeigt:
- Fig. 1: in Blockdarstellung stark vereinfacht den prinzipiellen Aufbau einer Kommunikationsanlage eines Unterseeboots,
- Fig. 2: einen Ablaufplan für die Ansteuerung einer Stillstandheizung der Kommunikationsanlage nach Fig. 1 und
- Fig. 3: einen Ablaufplan für die Ansteuerung einer UHF- Sende- und Empfangseinrichtung der Kommunikationsanlage nach Fig. 1.

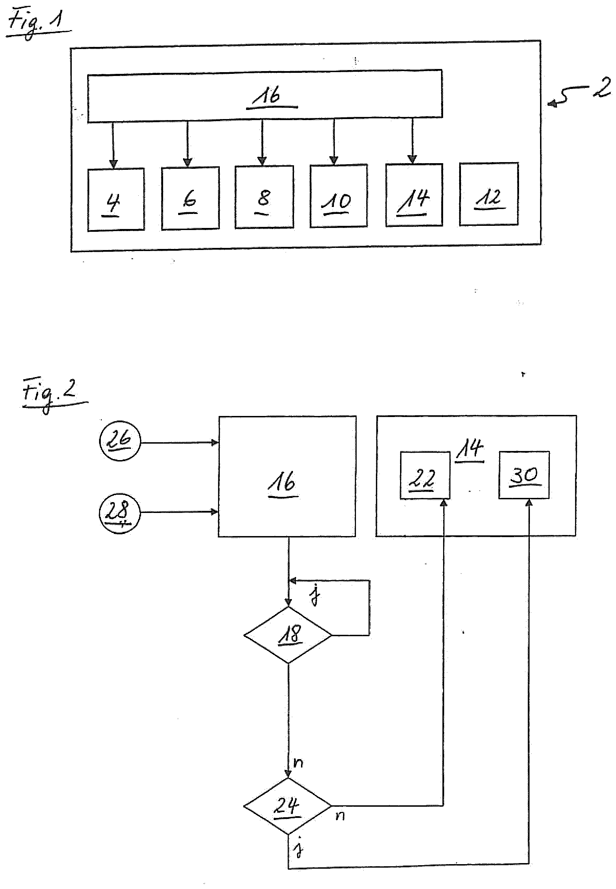

Die in Fig. 1 dargestellte Kommunikationsanlage 2 eines Unterseeboots ist in dem Unterseeboot in einem vom übrigen Bootsraum abgetrennten Funkraum untergebracht. Sie weist fünf Sende- und Empfangsvorrichtungen 4, 6, 8, 10 und 12 auf, die in unterschiedlichen Frequenzbereichen senden und empfangen. Im Speziellen handelt es sich um eine VLF- Sende- und Empfangseinrichtung 4, eine HF- Sende- und Empfangseinrichtung 6, eine VHF- Sende- und Empfangseinrichtung 8, eine UHF- Sende- und Empfangseinrichtung 10 und um eine GMDSS- Einrichtung 12.

Den Sende- und Empfangsvorrichtungen 4, 6, 8, 10 und 12 sind mehrere Stillstandheizungen 14 zugeordnet, die in den Sende- und Empfangsvorrichtungen 4, 6, 8, 10 und 12, wenn sie nicht eingeschaltet sind, eine Bildung von Kondenswasser verhindern sollen. Aus Gründen der besseren Übersichtlichkeit ist in Fig. 1 lediglich eine dieser Stillstandheizungen 14 dargestellt.

Jede der Sende- und Empfangsvorrichtungen 4, 6, 8, 10 und 12 kann manuell ein- und ausgeschaltet werden, wobei die GMDSS- Einrichtung 12 als Seenot- und Sicherheitsfunksystem aus Sicherheitsgründen in der Regel immer betriebsbereit gehalten wird. Die Sende- und Empfangsvorrichtungen 4, 6, 8 und 10 können zudem von einer Steuerung 16 zum Energiemanagement der Kommunikationsanlage 8 selbsttätig ein- und ausgeschaltet werden. Die Steuerung 16 dient dazu, in der Kommunikationsanlage 2 sicherzustellen, dass nur die Sende- und Empfangsvorrichtungen 4, 6, 8 und 10 eingeschaltet werden, die benutzt werden sollen und die übrigen der Sende- und Empfangsvorrichtungen 4, 6, 8 und 10, die nicht benutzt werden oder deren Einsatz unter Umständen gar nicht möglich ist, von der Steuerung 16 ggf. ausgeschaltet werden. In ähnlicher Weise werden von der Steuerung 16 auch die Stillstandheizungen 14 selbsttätig ein- und ausgeschaltet, wobei von der Steuerung 16 ermittelt wird, ob das Einschalten der Stillstandheizung 14 überhaupt erforderlich ist. Dieser Vorgang wird in Fig. 2 verdeutlicht.

Bezugnehmend auf Fig. 2 wird von der Steuerung 16 an einem Abfragepunkt 18 abgefragt ob eine der von der Steuerung 16 zu steuernden Stillstandheizung 14 zugeordnete Sende- und Empfangsvorrichtungen 4, 6, 8 und 10 in Betrieb ist. Ist die Antwort "Ja" j, ist der Einsatz der Stillstandheizung 14 nicht erforderlich. An dem Abfragepunkt 18 wird nun die Abfrage solange wiederholt, bis die Antwort "Nein" n ist. In diesem Fall ist von der Steuerung 16 zu prüfen, ob die Stillstandheizung 14 eingeschaltet werden muss. Falls an dem Abfragepunkt 18 die Antwort "Nein" n ist, wird an einem weiteren Abfragepunkt 24 abgefragt, ob in der Umgebung der eventuell zu heizenden Sende- und Empfangsvorrichtung 4, 6, 8 bzw. 10 die atmosphärischen Bedingungen so sind, dass eine Bildung von Kondenswasser möglich ist. Hierzu ist die Steuerung 16 mit einem Temperatursensor 26 und einem Feuchtigkeitssensor 28 signalverbunden, die in unmittelbarer Nähe der betreffenden Sende- und Empfangsvorrichtung 4, 6, 8 bzw. 10 angeordnet sind. Wird nun an dem Abfragepunkt 24 festgestellt, dass die atmosphärischen Bedingungen für eine Kondenswasserbildung gegeben sind, die Antwort also "Ja" j ist, wird die Stillstandheizung von der Steuerung 16 an einem symbolisch dargestellten Einschaltpunkt 30 eingeschaltet.

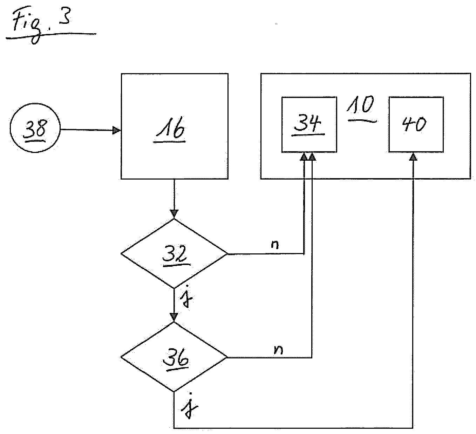

Fig. 3 betrifft die Steuerung der UHF- Sende- und Empfangsvorrichtung 10, die eine in dem Turm des Unterseeboots verfahrbare Antenne aufweist. Es wird davon ausgegangen, dass die UHF- Sende- und Empfangsvorrichtung 10 zu Beginn des nachfolgend beschriebenen Steuerungsvorgangs in Betrieb also eingeschaltet ist. Von der Steuerung 16 wird an einem Abfragepunkt 32 zunächst abgefragt, ob das Unterseeboot gerade Überwasser, in Sehrohrtiefe oder getaucht fährt. Bei Tauchfahrt des Unterseeboots ist die Antwort "Nein" n. In diesem Fall ist ein Sende- oder Empfangsbetrieb der UHF- Sende- und Empfangsvorrichtung 10 gar nicht möglich. Daher wird die UHF- Sende- und Empfangsvorrichtung 10 von der Steuerung 16 selbsttätig an einem in Fig. 3 lediglich symbolisch dargestellten Abschaltpunkt 34 abgeschaltet. Bei einer Antwort "Ja" j wird an einem Abfragepunkt 36 abgefragt, ob die Antenne der UHF- Sende- und Empfangsvorrichtung 10 in eine Sende- und/oder Empfangsposition oberhalb der Wasserlinie ausgefahren ist bzw. gerade in eine solche Sende- und/oder Empfangsposition verfahren wird. Dies geschieht mittels eines entsprechenden Sensors 38 der mit der Steuerung 16 signalverbunden ist. Befindet sich die Antenne in der Sende- und/oder Empfangsposition oder wird gerade in diese Position verfahren ist die Antwort "Ja" j und die UHF- Sende- und Empfangsvorrichtung 10 bleibt eingeschaltet oder wird von der Steuerung 16 eingeschaltet, wie anhand des Einschaltpunktes 40 an der UHF- Sende- und Empfangsvorrichtung 10 in Fig. 3 symbolisch dargestellt ist. Anderenfalls, d.h. bei einer Antwort Nein" n wird die UHF- Sende- und Empfangsvorrichtung 10 von der Steuerung 16 an dem Abschaltpunkt 34 selbsttätig abgeschaltet.

### Bezugszeichenliste

- 2: - Kommunikationsanlage
- 4: - VLF- Sende- und Empfangseinrichtung
- 6: - HF- Sende- und Empfangseinrichtung
- 8: - VHF- Sende- und Empfangseinrichtung
- 10: - UHF- Sende- und Empfangseinrichtung
- 12: - GMDSS- Einrichtung
- 14: - Stillstandheizung
- 16: - Steuerung
- 18: - Abfragepunkt
- 22: - Ausschaltpunkt
- 24: - Abfragepunkt
- 26: - Temperatursensor
- 28: - Feuchtigkeitssensor
- 30: - Einschaltpunkt
- 32: - Abfragepunkt
- 34: - Ausschaltpunkt
- 36: - Abfragepunkt
- 38: - Sensor
- 40: - Einschaltpunkt

- j: - Ja
- n: - Nein

## Patentansprüche

1. Unterseeboot, mit einer Kommunikationsanlage (2), welche mehrere zum Betrieb in unterschiedlichen Frequenzbereichen ausgebildete Sende- und/oder Empfangseinrichtungen (4, 6, 8, 10) zur Übertragung informationsübertragender Signale nach außerhalb des Unterseebootes und zum Empfang informationstragender Signale von außerhalb des Unterseeboots und eine Steuerung (16) zum Energiemanagement der Kommunikationsanlage (2) aufweist, **dadurch gekennzeichnet, dass** eine oder mehrere Komponenten der Sende- und/oder Empfangseinrichtungen (4, 6, 8, 10) aufgrund eines oder mehrerer der folgenden Zustände:
a) Antennenposition
b) Betriebszustand von Ausfahrmasten
c) Tauchtiefe des Unterseeboots
von der Steuerung (16) selbstständig ein- und ausschaltbar sind.

2. Unterseeboot nach einem der vorangehenden Ansprüche, bei dem die Kommunikationsanlage (2) mindestens eine Stillstandheizung (14) aufweist, die von der Steuerung (16) selbsttätig ein- und ausschaltbar ist.

3. Unterseeboot nach Anspruch 3, bei dem die Stillstandheizung (14) der Sende- und/oder Empfangseinrichtungen (4, 6, 8, 10) aufgrund eines oder beider der folgenden Zustände von der Steuerung (16) ein- und ausgeschaltet werden:
a) Temperatur der die Kommunikationsanlage umgebenden Atmosphäre,
b) Feuchtigkeit der die Kommunikationsanlage umgebenden Atmosphäre,

4. Unterseeboot nach einem der vorangehenden Ansprüche, bei dem die Steuerung (16) mit im Bereich der Kommunikationsanlage (2) angeordneten Mitteln zur Erfassung der Temperatur signalverbunden ist.

5. Unterseeboot nach einem der vorangehenden Ansprüche, bei dem die Steuerung (16) mit im Bereich der Kommunikationsanlage (2) angeordneten Mitteln zur Erfassung der Luftfeuchtigkeit signalverbunden ist.

6. Unterseeboot nach einem der vorangehenden Ansprüche, bei dem die Steuerung (16) zur Erfassung der Antennenpositionen der einzelnen Sende- und Empfangseinrichtungen (4, 6, 8, 10) ausgebildet ist.

7. Unterseeboot nach einem der vorangehenden Ansprüche, bei dem die Steuerung (16) zur Erfassung des jeweiligen Betriebszustands der Ausfahrmasten des Unterseeboots ausgebildet ist.

## Claims

1. Submarine, with a communication system (2), which comprises a number of transmitting and/or receiving devices (4, 6, 8, 10) designed for operating in different frequency ranges and intended for transmitting information-transferring signals to outside the submarine and for receiving information-bearing signals from outside the submarine and comprises a controller (16) for energy management of the communication system (2), **characterized in that** one or more components of the transmitting and/or receiving devices (4, 6, 8, 10) can be automatically switched on and off by the controller (16) on the basis of one or more of the following states:
a) the antenna position
b) the operating state of retractable masts
c) the diving depth of the submarine.

2. Submarine according to one of the preceding claims, in which the communication system (2) comprises at least one standstill heater (14), which can be automatically switched on and off by the controller (16) .

3. Submarine according to Claim 3, in which the standstill heaters (14) of the transmitting and/or receiving devices (4, 6, 8, 10) are switched on and off by the controller (16) on the basis of one or both of the following states:
a) the temperature of the atmosphere surrounding the communication system,
b) the humidity of the atmosphere surrounding the communication system.

4. Submarine according to one of the preceding claims, in which the controller (16) is signal-connected to means for recording the temperature that are arranged in the region of the communication system (2) .

5. Submarine according to one of the preceding claims, in which the controller (16) is signal-connected to means for recording the atmospheric humidity that are arranged in the region of the communication system (2).

6. Submarine according to one of the preceding claims, in which the controller (16) is designed for recording the antenna positions of the individual transmitting and receiving devices (4, 6, 8, 10).

7. Submarine according to one of the preceding claims, in which the controller (16) is designed for recording the respective operating state of the retractable masts of the submarine.

## Revendications

1. Submersible comportant un système de communication (2) qui comporte, des dispositifs d'émission et/ou de réception (4, 6, 8, 10) destinés à fonctionner dans différents domaines de fréquences, permettant de transmettre des signaux de transmission d'informations vers l'extérieur du submersible et permettant de recevoir des signaux transmission d'informations de l'extérieur du submersible et une unité de commande (16) permettant de gérer l'énergie du système de communication (2), **caractérisé en ce qu'**un ou plusieurs composants des dispositifs d'émission et/ou de réception (4, 6, 8, 10) peut/peuvent être automatiquement activé(s) et désactivé(s) par l'unité de commande (16) sur la base d'un ou de plusieurs des états suivants :
a) position des antennes
b) état de fonctionnement des mâts télescopiques
c) profondeur de plongée du submersible.

2. Submersible selon l'une des revendications précédentes, dans lequel le système de communication (2) possède au moins un chauffage d'état stationnaire (14) qui peut être automatiquement activé et désactivé par l'unité de commande (16).

3. Submersible selon la revendication 3, dans lequel le chauffage d'état stationnaire (14) des dispositifs d'émission et/ou de réception (4, 6, 8, 10) peut être activé et désactivé par l'unité de commande (16) sur la base de l'un des états suivants ou des deux :
a) température de l'atmosphère au voisinage de l'installation de communication,
b) humidité de l'atmosphère au voisinage de l'installation de communication.

4. Submersible selon l'une des revendications précédentes, dans lequel l'unité de commande (16) est reliée par signaux à des moyens de détection de température disposés dans la zone du système de communication (2).

5. Submersible selon l'une des revendications précédentes, dans lequel l'unité de commande (16) est reliée par signaux à des moyens de détection d'humidité de l'air disposés dans la zone du système de communication (2).

6. Submersible selon l'une des revendications précédentes, dans lequel l'unité de commande (16) est conçue pour détecter les positions d'antennes des dispositifs d'émission et de réception (4, 6, 8, 10) individuels.

7. Submersible selon l'une des revendications précédentes, dans lequel l'unité de commande (16) est conçue pour détecter l'état de fonctionnement respectif des mâts télescopiques du submersible.
